# EUROPEAN PATENT APPLICATION

(11) **EP 4 557 705 A1**
(43) Date of publication of application: **21.05.2025**
(21) Application number: 23839005.8
(22) Date of filing: 13.07.2023
(51) Int. Cl.: H04L 67/12, H04L 9/40, H04L 9/08

(54) **VEHICLE MONITORING METHOD AND DEVICE, AND STORAGE MEDIUM**

(30) Priority: 14.07.2022 CN 202210834133
(71) Applicant: Nio Technology (Anhui) Co., Ltd, Hefei City, Anhui 230601 (CN)
(72) Inventor: LU, Long, Shanghai 201804 (CN); LI, Zhengyu, Shanghai 201804 (CN); SUN, Ying, Shanghai 201804 (CN); WANG, Xu, Shanghai 201804 (CN); LV, Chao, Shanghai 201804 (CN)
(74) Representative: Vossius & Partner Patentanwälte Rechtsanwälte mbB
(86) International application number: PCT/CN2023/107146
(87) International publication number: WO 2024/012515

(57) **Abstract**

The disclosure provides a vehicle monitoring method and device, and a storage medium. The method includes: obtaining monitoring data of a vehicle and at least one piece of first label information corresponding thereto; generating a first derived key of a preset length based on the at least one piece of first label information and a pre-stored seed key by using a key derivation algorithm; extracting a one-time first encryption key corresponding to the monitoring data from the first derived key; encrypting the monitoring data by using the one-time first encryption key; and transmitting obtained encrypted monitoring data to a monitoring end, such that the monitoring end generates the one-time first encryption key and then decrypts the encrypted monitoring data with the generated one-time first encryption key to obtain the monitoring data. The disclosure allows further derivation from the derived key generated of the preset length by using the key derivation algorithm, so as to extract the one-time first encryption key to encrypt the monitoring data, which can effectively prevent encryption cracking and enhance the security of the monitoring data during data transmission, thereby increasing the reliability of vehicle surveillance.

## Description

This application claims priority to Chinese Patent Application No. 202210834133.3, filed on July 14, 2022 and entitled "VEHICLE MONITORING METHOD AND DEVICE, AND STORAGE MEDIUM", which is incorporated herein by reference in its entirety.

### Technical Field

The disclosure relates to the field of vehicle monitoring technologies, and specifically provides a vehicle monitoring method and device, and a storage medium.

### Background Art

With the rapid economic development, the global vehicle ownership has been increasing, and many families have purchased vehicles. In addition to regular maintenance and fuel costs, repair is another significant expense for vehicles, especially for luxury-brand vehicles. Many parking places lack surveillance or have surveillance blind spots, making it difficult to identify the responsible party when a vehicle is scratched or maliciously damaged. As a result, the financial losses often fall solely on the vehicle owner. Conventionally, the market has seen a few devices capable of recording monitored activities inside and outside the vehicle while parked. In addition, during a vehicle's operation, such devices are also often used to obtain information about the vehicle or to monitor specific items within it, and the devices may collect monitoring data during such surveillance.

However, whether the vehicle is parked or in operation, the acquired monitoring data may involve the privacy of related individuals. If such data were to be leaked, it could have a significant impact on the individuals, thus reducing the reliability of vehicle surveillance.

### Summary

In order to overcome the above defects, the disclosure herein provides a vehicle monitoring method and device, and a storage medium, to solve or at least partially solve the problem of low reliability of vehicle surveillance due to vehicle monitoring data leakage.

In a first aspect, the disclosure provides a vehicle monitoring method. The method is performed by a vehicle end, and the method includes:
obtaining monitoring data of a vehicle and at least one piece of first label information corresponding to the monitoring data;
generating a first derived key of a preset length based on the at least one piece of first label information and a pre-stored seed key by using a key derivation algorithm;
extracting a one-time first encryption key corresponding to the monitoring data from the first derived key of the preset length;
encrypting the monitoring data by using the one-time first encryption key to obtain encrypted monitoring data; and
transmitting the encrypted monitoring data to a monitoring end, such that the monitoring end generates the one-time first encryption key and then decrypts the encrypted monitoring data with the generated one-time first encryption key to obtain the monitoring data.

In a second aspect, the disclosure provides a vehicle monitoring method. The method is performed by a monitoring end, and the method includes:
obtaining, in response to receiving encrypted monitoring data transmitted by a vehicle end, at least one piece of first label information corresponding to the encrypted monitoring data;
generating a first derived key of a preset length based on the at least one piece of first label information and a pre-stored seed key by using a key derivation algorithm;
extracting a one-time first encryption key corresponding to the encrypted monitoring data from the first derived key of the preset length; and
decrypting the encrypted monitoring data by using the one-time first encryption key to obtain monitoring data corresponding to the encrypted monitoring data.

In a third aspect, there is provided a vehicle monitoring method. The method is performed by a monitoring system including a vehicle end and a monitoring end, and the method includes:
the vehicle end obtaining monitoring data of a vehicle and at least one piece of first label information corresponding to the monitoring data; generating a first derived key of a preset length based on the at least one piece of first label information and a pre-stored seed key by using a key derivation algorithm; extracting a one-time first encryption key corresponding to the monitoring data from the first derived key of the preset length; encrypting the monitoring data by using the one-time first encryption key to obtain encrypted monitoring data; and transmitting the encrypted monitoring data to the monitoring end; and
the monitoring end obtaining, in response to receiving the encrypted monitoring data transmitted by the vehicle end, at least one piece of first label information corresponding to the encrypted monitoring data; generating a first derived key of a preset length based on the at least one piece of first label information and a pre-stored seed key by using a key derivation algorithm; extracting a one-time first encryption key corresponding to the encrypted monitoring data from the first derived key of the preset length; and decrypting the encrypted monitoring data by using the one-time first encryption key to obtain the monitoring data corresponding to the encrypted monitoring data.

In a fourth aspect, there is provided a vehicle monitoring device including a processor and a storage apparatus, wherein the storage apparatus is configured to store a plurality of pieces of program code, and the program code is configured to be loaded and run by the processor to perform the vehicle monitoring method as described in any one of the above aspects.

In a fifth aspect, there is provided a computer-readable storage medium storing a plurality of pieces of program code, wherein the program code is configured to be loaded and run by a processor to perform the vehicle monitoring method as described in any one of the above technical solutions.

The one or more technical solutions of the disclosure described above have at least one or more of the following advantages.

In technical solutions for implementing the disclosure, by obtaining monitoring data of a vehicle and at least one piece of first label information corresponding to the monitoring data, generating a first derived key of a preset length based on the at least one piece of first label information and a pre-stored seed key by using a key derivation algorithm, extracting a one-time first encryption key corresponding to the monitoring data from the first derived key of the preset length, encrypting the monitoring data by using the one-time first encryption key to obtain encrypted monitoring data, and transmitting the encrypted monitoring data to a monitoring end, such that the monitoring end generates the one-time first encryption key and then decrypts the encrypted monitoring data with the generated one-time first encryption key to obtain the monitoring data The disclosure allows further derivation from the derived key generated of the preset length by using the key derivation algorithm, so as to extract the one-time first encryption key to encrypt the monitoring data. In this way, even when the first label information corresponding to the monitoring data and the seed key are leaked, encryption cracking can still be effectively prevented, thereby enhancing the security of the monitoring data during data transmission, and thus increasing the reliability of vehicle surveillance.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In addition, similar numbers in the figures are used to represent similar components, in which:
FIG. 1 is a schematic flowchart of main steps of a vehicle monitoring method according to an embodiment of the disclosure;
FIG. 2 is a schematic flowchart of main steps of a vehicle monitoring method according to another embodiment of the disclosure;
FIG. 3 is a block diagram of a main structure of a monitoring system according to an embodiment of the disclosure; and
FIG. 4 is a block diagram of a main structure of a vehicle monitoring device according to an embodiment of the disclosure.

### Detailed Description of Embodiments

Some implementations of the disclosure are described below with reference to the accompanying drawings. Those skilled in the art should understand that these implementations are merely used to explain the technical details of the disclosure, and are not intended to limit the scope of protection of the disclosure.

In the description of the disclosure, a "module" or "processor" may include hardware, software, or a combination thereof. A module may include hardware circuit(s), various suitable sensors, communication port(s), memory(ies), software such as program code, or a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one A or B" or "at least one of A and B" has a meaning similar to "A and/or B" and may include only A, only B, or A and B. The terms "a/an" and "this" in the singular form may also include the plural form.

In the related art, monitoring information of a vehicle is commonly obtained through a surveillance device, whether the vehicle is parked or in operation, and the acquired monitoring data may involve the privacy of related individuals. If such data were to be leaked, it could have a significant impact on the individuals,, thus reducing the reliability of vehicle surveillance.

Therefore, to solve the above technical problem, the disclosure provides the following technical solutions.

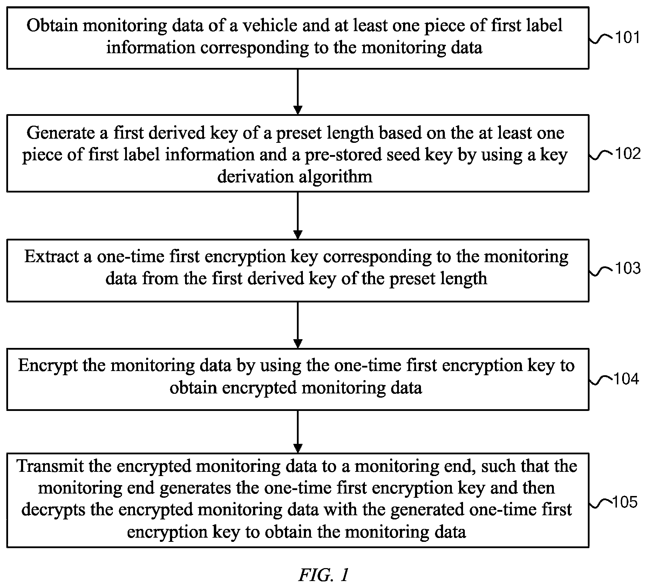

Referring to FIG. 1, FIG. 1 is a schematic flowchart of main steps of a vehicle monitoring method according to an embodiment of the disclosure. The vehicle monitoring method is performed by a vehicle end. As shown in FIG. 1, the vehicle monitoring method may include steps 101 to 105, which will be described in detail below.

Step 101: Obtain monitoring data of a vehicle and at least one piece of first label information corresponding to the monitoring data.

In a specific implementation, a vehicle monitoring mode may be activated by a user through a mobile phone or the vehicle end. After the vehicle monitoring mode is activated, the vehicle enters a guardian mode on the vehicle's side for passive surveillance, or a remote viewing mode for active surveillance. The guardian mode on the vehicle's side can be activated in response to receiving a monitoring instruction transmitted from a monitoring end or to the generation of a monitoring instruction by the monitoring end. The remote viewing mode can be activated in response to receiving a remote viewing request transmitted from the monitoring end.

After the vehicle monitoring mode is activated, the monitoring data of the vehicle can be acquired by a surveillance device equipped at the vehicle end, and then the at least one piece of first label information corresponding to the monitoring data can be obtained. The at least one piece of label information may include timestamp information, random information, predefined information, and other information about the current session. During data transmission between the vehicle end and the monitoring end, the monitoring data of the vehicle is encrypted, while the at least one piece of label information corresponding to the monitoring data of the vehicle is transmitted in plain text. The surveillance devices equipped at the vehicle end may include, but are not limited to, cameras positioned around the vehicle body, ultrasonic radars, sensors such as G-sensors, and the like.

Step 102: Generate a first derived key of a preset length based on the at least one piece of first label information and a pre-stored seed key by using a key derivation algorithm.

In a specific implementation, the monitoring mode of the vehicle is the guardian mode, and the first derived key of a preset length is generated in response to detecting that the monitoring data meets a predetermined alarm condition. The alarms corresponding to the guardian mode may be tiered into three levels: a first-level alarm triggered when an object approaches the vehicle and remains close to the vehicle for a certain period of time, a second-level alarm triggered in the event of a collision, and a third-level alarm triggered in the event of theft or robbery. If the monitoring mode of the vehicle is the remote viewing mode, the first derived key of a preset length is generated directly.

In a specific implementation, there is one piece of first label information, and generation of the first derived key of a present length may refer to the following steps:
(1) Hash the first label information to obtain a first hash value, and truncate the first hash value to obtain a truncated first hash value.
   In some aspects, the first label information may be hashed by using the key derivation algorithm to obtain a first hash value, which is then truncated according to a preset truncation rule to obtain a truncated first hash value. The preset truncation rule may be selected based on truncation needs, and is not specifically limited in this embodiment.
(2) Generate the first derived key of the preset length based on the seed key and the truncated first hash value.

The seed key and the truncated first hash value may be processed via an HKDF key derivation algorithm to obtain the derived key of the preset length.

In another specific implementation, there are at least two pieces of first label information, and generation of the first derived key of the present length may refer to the following steps:
(11) Concatenate all the pieces of first label information to obtain concatenated information.

In a specific implementation, all the pieces of first label information may be concatenated to obtain first concatenated information. For example, all the pieces of first label information may include timestamp information "10101100," random information "10001001," and predefined information "11001011," which may be concatenated to obtain first concatenated information "10101100 10001001 11001011."

(12) Hash the concatenated information to obtain a second hash value, and truncate the second hash value to obtain a truncated second hash value.

After the first concatenated information is obtained, the first concatenated information is hashed to obtain the second hash value, which is then truncated according to a preset truncation rule, so as to obtain the truncated second hash value. The preset truncation rule may be selected according to based on truncation needs, and is not specifically limited in this embodiment.

(13) Generate the first derived key of the preset length based on the seed key and the truncated second hash value.

The seed key and the truncated second hash value may be processed via the HKDF key derivation algorithm to obtain the derived key of the preset length.

Step 103: Extract a one-time first encryption key corresponding to the monitoring data from the first derived key of the preset length.

In a specific implementation, after the first derived key of the preset length is obtained, in order to further increase the difficulty of encryption cracking, the one-time first encryption key corresponding to the data to be processed may be extracted from the first derived key of the preset length according to a preset extraction rule.

Specifically, the preset extraction rule may be customized. For example, a key of a length of 512 bytes is derived by using the HKDF key derivation algorithm, and a length of the one-time first encryption key is 256 bytes. The extraction rule may be defined as intermediate segmentation, such that a portion of the key can be selected as the one-time first encryption key. Alternatively, other extraction rules may be used, such as extracting 256 bytes from 512 bytes of data to form the one-time first encryption key. Further examples will not be exhausted in this embodiment. In this way, the extraction of the one-time first encryption key from the derived key of the preset length can effectively prevent encryption cracking even when the first label information corresponding to the monitoring data and the seed key are leaked.

Step 104: Encrypt the monitoring data by using the one-time first encryption key to obtain encrypted monitoring data.

In a specific implementation, the vehicle end may encrypt the monitoring data by using the one-time first encryption key after obtaining the one-time first encryption key, so as to obtain the encrypted monitoring data.

Step 105: Transmit the encrypted monitoring data to the monitoring end, such that the monitoring end generates the one-time first encryption key and then decrypts the encrypted monitoring data with the generated one-time first encryption key to obtain the monitoring data.

The vehicle end may transmit the encrypted monitoring data to the monitoring end. Specifically, if the monitoring mode of the vehicle end is the guardian mode, the type of the monitoring data that is generated and encrypted is offline session type. The encrypted monitoring data may be uploaded to a cloud server, and when the cloud server transmits an alarm notification to the monitoring end, the monitoring end transmits a download request to the cloud server so as to download the encrypted monitoring data from the cloud server. If the monitoring mode of the vehicle is the remote viewing mode, the type of the monitoring data that is generated and encrypted is active session type. In this case, the encrypted monitoring data may be uploaded to the cloud server, and the cloud server transmits the encrypted monitoring data directly to the monitoring end.

In a specific implementation, after receiving the encrypted monitoring data transmitted by the vehicle end, the monitoring end may obtain at least one piece of first label information corresponding to the encrypted monitoring data; generate a first derived key of a preset length based on the at least one piece of first label information and a pre-stored seed key by using a key derivation algorithm; extract a one-time first encryption key corresponding to the encrypted monitoring data from the first derived key of the preset length; and decrypt the encrypted monitoring data by using the one-time first encryption key to obtain the monitoring data corresponding to the encrypted monitoring data.

The vehicle monitoring method as disclosed herein, by obtaining monitoring data of a vehicle and at least one piece of first label information corresponding to the monitoring data, generating a first derived key of a preset length based on the at least one piece of first label information and a pre-stored seed key by using a key derivation algorithm, extracting a one-time first encryption key corresponding to the monitoring data from the first derived key of the preset length, encrypting the monitoring data by using the one-time first encryption key to obtain encrypted monitoring data, and transmitting the encrypted monitoring data to a monitoring end, such that the monitoring end generates the one-time first encryption key and then decrypts the encrypted monitoring data with the generated one-time first encryption key to obtain the monitoring data. The disclosure allows further derivation from the derived key of the preset length by using the key derivation algorithm, so as to extract the one-time first encryption key to encrypt the monitoring data. In this way, even when the first label information corresponding to the monitoring data and the seed key are leaked, encryption cracking can still be effectively prevented, thereby enhancing the security of the monitoring data during data transmission, and thus increasing the reliability of vehicle surveillance.

In a specific implementation, in order to further improve the security of encryption of the monitoring data, the one-time first encryption key may also be used in conjunction with a one-time initialization vector during encryption, so as to perform salted encryption on the data to be processed, thereby enhancing the security of encryption. The one-time initialization vector may be generated with reference to the following steps:
(21) Encrypt the at least one piece of first label information to obtain a first encrypted cipher text.

In a specific implementation, the first label information may be timestamp information. As such, the first label information may be encrypted by using HmacSha1 algorithm, such that the first encrypted cipher text is returned.

(22) Extract first target information from the first encrypted cipher text.

In a specific implementation, the first target information may be extracted from the first encrypted cipher text according to a customized extraction rule.

(23) Encrypt the first target information to obtain a second encrypted cipher text.

The extracted first target information may be further encrypted by Sha256 algorithm, such that the second encrypted cipher text is returned.

(24) Extract second target information from the second encrypted cipher text and the extracted second target information is the one-time initialization vector.

The second target information may be extracted from the second encrypted cipher text according to a customized extraction rule.

In this way, obtaining the second target information as the one-time initialization vector by performing two extractions according to customized extraction rules when generating the one-time initialization vector allows increased difficulty of cracking the one-time initialization vector, thereby further enhancing data security.

In a specific implementation, a first key digest corresponding to the one-time first encryption key may be further generated based on the one-time first encryption key. The first key digest is transmitted to the monitoring end, such that the monitoring end generates a second key digest and compares the second key digest against the first key digest to verify the one-time first encryption key, so as to confirm that the encrypted monitoring data is transmitted by the vehicle end.

In a specific implementation, the seed key may be obtained via two methods as described below.

In the first method, the seed key is generated by the vehicle end at the vehicle end, and the steps include:
(31) Obtain a master key of the vehicle end, a device identification code of the vehicle end, preset context information, and random information.

In a specific implementation, the master key of the vehicle end, the device identification code of the vehicle end, the preset context information, and the random information may be obtained. The master key of the vehicle end may be generated by a hardware security module of the vehicle end, and a life cycle of the master key of the vehicle end is consistent with that of hardware of the vehicle end. In other words, the master key of the vehicle end may be generated based on relevant information of the hardware of the vehicle end. The master key of the vehicle end needs to be regenerated if the hardware of the vehicle end is replaced.

(32) Generate the seed key based on the master key of the vehicle end, the device identification code of the vehicle end, the preset context information, and the random information by using a key derivation algorithm, and store the seed key.

In a specific implementation, the master key of the vehicle end, the device identification code of the vehicle end, the preset context information, and the random information may be processed by using the key derivation algorithm, so as to generate the seed key by key derivation, and the seed key is stored.

In various aspects, after the seed key is generated, the seed key is shared with the end with which the vehicle end has established a communication connection. Therefore, in order to ensure the security of the seed key, the seed key may be shared in an encrypted manner, for which reference can be specifically made to the following steps:
(41) Obtain signature information of the seed key based on the device identification code of the vehicle end.

In a specific implementation, the signature information of the seed key may be obtained by processing the device identification code of the vehicle endvia HMAC algorithm, and the seed key may be signed by using the signature information, so as toprotect the seed key against tampering.

(42) Concatenate the signature information, the seed key, and current timestamp information to obtain second concatenated information.

In a specific implementation, the signature information, the seed key, and the current timestamp information are concatenated to obtain the second concatenated information according to a preset concatenating rule.

(43) Encrypt the second concatenated information based on a password provided by a user to obtain encrypted seed key information, such that the recipient end of the shared seed key, when being shared with the seed key, can decrypt the encrypted seed key information and obtain the seed key.

In the second method, the seed key is obtained from the monitoring end, and the steps include:
(51) Obtain encrypted seed key information by scanning a code.

In a specific implementation, the encrypted seed key information may be carried in a QR code, such that the encrypted seed key information can be obtained by scanning the code.

(52) Decrypt the encrypted seed key information based on a password provided by a user to obtain decrypted seed key information.

(53) Extract signature information and the seed key from the decrypted seed key information.

(54) Verify the seed key based on the device identification code of the vehicle end and the signature information.

(55) Store the seed key after verification.

It should be noted that in practical practice, the first method is selected for obtaining the seed key. That is, the seed key is generated by the vehicle end at the vehicle end, and the monitoring end obtains the seed key by scanning a QR code presented by the vehicle end to obtain and decrypt the encrypted seed key.

In a specific implementation, the user may also control the vehicle end through the monitoring end. The monitoring end generates control data for controlling the vehicle end, and obtains at least one piece of second label information corresponding to the control data; generates a second derived key of a preset length based on the at least one piece of second label information and the pre-stored seed key; extracts a one-time second encryption key corresponding to the control data from the second derived key of the preset length; encrypts the monitoring data by using the one-time second encryption key to obtain encrypted control data; and transmits the encrypted control data to the vehicle end.

The vehicle end obtains, in response to receiving encrypted control data transmitted by the monitoring end, at least one piece of second label information corresponding to the encrypted control data; generates a second derived key of a preset length based on the at least one piece of second label information and the pre-stored seed key; extracts a one-time second encryption key corresponding to the encrypted control data from the second derived key of the preset length; and decrypts the encrypted control data by using the one-time second encryption key to obtain control data corresponding to the encrypted control data for controlling the vehicle end.

The above operation steps for encrypting or decrypting the control data is the same as the foregoing operation steps for encrypting or decrypting the monitoring data, and reference can be made to relevant descriptions above for details, which will not be repeated herein.

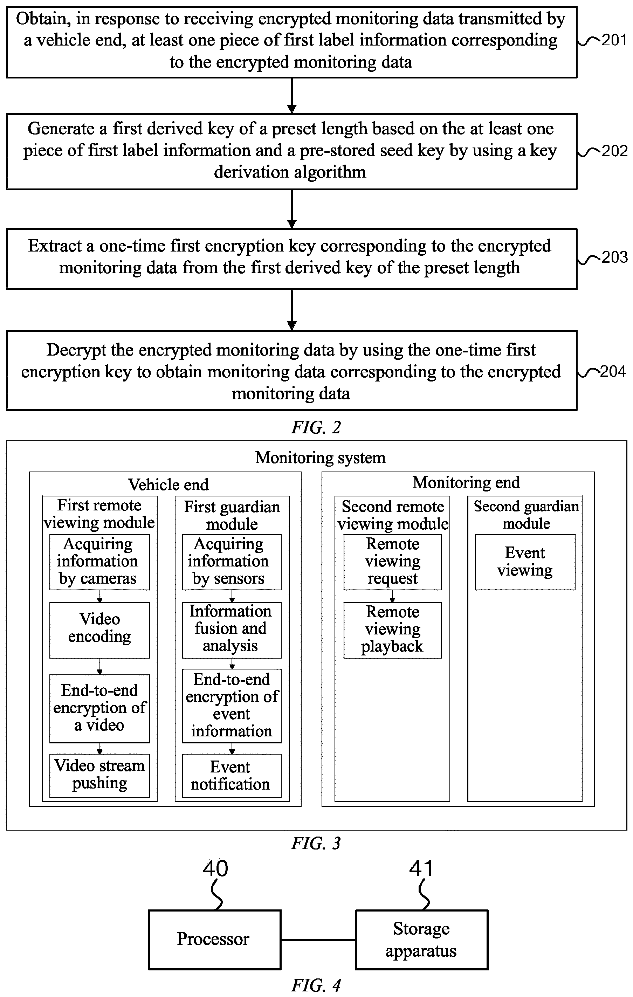

Referring to FIG. 2, FIG. 2 is a schematic flowchart of main steps of a vehicle monitoring method according to another embodiment of the disclosure. The vehicle monitoring method is performed by a monitoring end. As shown in FIG. 2, in some aspects, the vehicle monitoring method mainly includes steps 201 to 204, which will be described in detail below.

Step 201: Obtain, in response to receiving encrypted monitoring data transmitted by a vehicle end, at least one piece of first label information corresponding to the encrypted monitoring data.

In a specific implementation, the monitoring data of the vehicle end and the encrypted monitoring data correspond to the same first label information. The first label information is transmitted to the monitoring end in plain text, and at least one piece of first label information may be obtained by the monitoring end.

Step 202: Generate a first derived key of a preset length based on the at least one piece of first label information and a pre-stored seed key by using a key derivation algorithm.

In a specific implementation, the process of generating the first derived key of the preset length by the monitoring end is the same as the process of generating the first derived key of the preset length by the vehicle end, and reference can be made to relevant descriptions above for details, which will not be repeated herein.

It should be noted that, to pre-store the seed key at the monitoring end, the monitoring end may obtain the encrypted seed key from the vehicle end by code scanning, decrypt the encrypted seed key to obtain and store the seed key, and reference can be made to relevant descriptions above for details, which will not be repeated herein.

Step 203: Extract a one-time first encryption key corresponding to the encrypted monitoring data from the first derived key of the preset length.

In a specific implementation, the process of extracting the one-time first encryption key by the monitoring end is the same as the process of extracting the one-time first encryption key by the vehicle end, and reference can be made to relevant descriptions above for details, which will not be repeated herein.

Step 204: Decrypt the encrypted monitoring data by using the one-time first encryption key to obtain the monitoring data corresponding to the encrypted monitoring data.

The vehicle monitoring method as disclosed herein, by obtaining, in response to receiving encrypted monitoring data transmitted by the vehicle end, at least one piece of first label information corresponding to the encrypted monitoring data, generating a first derived key of a preset length based on the at least one piece of first label information and the pre-stored seed key by using a key derivation algorithm, extracting a one-time first encryption key corresponding to the encrypted monitoring data from the first derived key of the preset length, and decrypting the encrypted monitoring data by using the one-time first encryption key to obtain monitoring data corresponding to the encrypted monitoring data. The disclosure allows further derivation from the derived key of the preset length by using the key derivation algorithm, so as to extract the one-time first encryption key to encrypt the monitoring data. In this way, even when the first label information corresponding to the monitoring data and the seed key are leaked, encryption cracking can still be effectively prevented, thereby enhancing the security of the monitoring data during data transmission, and thus increasing the reliability of vehicle surveillance.

In a specific implementation, in order to further improve the security of encryption of the monitoring data, the one-time first encryption key may also be used in conjunction with a one-time initialization vector during encryption, so as to perform salted encryption on the data to be processed, thereby enhancing the security of encryption. Therefore, the monitoring end also needs to generate the one-time initialization vector during decryption. For the generation process of the one-time initialization vector, refer to the generation process of the one-time initialization vector at the vehicle end, which will not be repeated herein.

In a specific implementation, a first key digest corresponding to the one-time first encryption key may be further generated based on the one-time first encryption key. The first key digest is transmitted to the monitoring end, such that the monitoring end generates a second key digest and compares the second key digest against the first key digest to verify the one-time first encryption key, so as to confirm that the encrypted monitoring data is transmitted by the vehicle end.

In a specific implementation, before step 201 "obtain, in response to receiving encrypted monitoring data transmitted by a vehicle end, at least one piece of first label information corresponding to the encrypted monitoring data," the following steps may be performed:
if the monitoring mode of the vehicle is guardian mode, transmitting, in response to receiving a warning notification, a download request to a cloud server to download the encrypted monitoring data from the cloud server, where the guardian mode can be activated in response to a monitoring instruction being transmitted to the vehicle end, or a monitoring instruction transmitted by the vehicle end being received; and
if the monitoring mode of the vehicle is remote viewing mode, receiving the encrypted monitoring data directly from the cloud server, where the remote viewing mode can be activated in response to a remote viewing request being transmitted to the vehicle end.

In a specific implementation, the user may also control the vehicle end through the monitoring end. For details of the encryption or decryption process of the control data during the control of the vehicle end by the monitoring end, reference can be made to relevant descriptions above, which will not be repeated herein.

Further, the disclosure further provides a vehicle monitoring method performed by a monitoring system including a vehicle end and a monitoring end.

The vehicle end obtains monitoring data of a vehicle and at least one piece of first label information corresponding to the monitoring data; generates a first derived key of a preset length based on the at least one piece of first label information and the pre-stored seed key by using a key derivation algorithm; extracts a one-time first encryption key corresponding to the monitoring data from the first derived key of the preset length; encrypts the monitoring data by using the one-time first encryption key to obtain encrypted monitoring data; and transmits the encrypted monitoring data to the monitoring end.

The monitoring end obtains, in response to receiving the encrypted monitoring data transmitted by the vehicle end, at least one piece of first label information corresponding to the encrypted monitoring data; generates a first derived key of a preset length based on the at least one piece of first label information and the pre-stored seed key by using a key derivation algorithm; extracts a one-time first encryption key corresponding to the encrypted monitoring data from the first derived key of the preset length; and decrypts the encrypted monitoring data by using the one-time first encryption key to obtain the monitoring data corresponding to the encrypted monitoring data.

Referring to FIG. 3, FIG. 3 is a block diagram of a main structure of an example monitoring system. As shown in FIG. 3, the vehicle end may include a first remote viewing module and a first guardian module, and the monitoring end may include a second remote viewing module and a second guardian module.

The first remote viewing module is configured to perform the following functions:
acquiring information through cameras (or through other surveillance devices, which are not specifically limited in this embodiment): remote viewing service at the vehicle end collects live footages captured by cameras positioned inside and outside the vehicle in response to a request transmitted from a mobile phone for remote viewing function;
video encoding: a video codec module configured to encode the acquired real-time picture information;
end-to-end video encryption: calling an end-to-end encryption module to encrypt the encoded video stream; and
video streaming: transmitting, by a video streaming module, the encrypted video stream to the mobile phone and the mobile phone then plays the video stream.

The first guardian module is configured to perform the following functions:
acquiring information through sensors (or through other surveillance devices, which are not specifically limited in this embodiment): acquiring various information of sensors by a sensor information acquisition module, including cameras around the vehicle body, ultrasonic radars, and sensors such as G-sensors, through a guardian mode service when the guardian mode is activated by a user at the monitoring end or the vehicle end;
information fusion and analysis: fusing and analyzing information captured by various sensors under the guardian mode, and reporting incidents when the analysis result meets a predetermined alarm condition, where in a specific implementation, the alarms may be tiered into three levels: a first-level alarm triggered when an object approaches the vehicle and remains close to the vehicle for a certain period of time, a second-level alarm triggered in the event of a collision, and a third-level alarm triggered in the event of theft or robbery; and
incident notification and end-to-end encryption of incident information: generating incident information under the guardian mode when an alarm is triggered, including time, location, level of the alarm, description of the alarm, video footage and clips, pictures, etc., calling an end-to-end encryption module to generate offline session information, deriving an offline session key based on the offline session information via a key derivation algorithm, calling an end-to-end encryption interface and the offline session key to encrypt the incident information, and pushing the end-to-end encrypted incident information and the offline session information (the offline session information is transmitted in plain text) to the cloud server and send notifications to the monitoring end.

The second remote viewing module is configured to perform the following functions:
remote viewing request: in response to receiving a click at the monitoring end for requesting remote viewing, the remote viewing service at the vehicle end responding to the remote viewing request, the monitoring end establishing a real-time session connection with the vehicle end, and deriving end-to-end encryption session keys by using real-time session information and an end-to-end encryption key derivation algorithm (the keys are generated at the two ends as a result of key derivation algorithm calculations, such that the session keys are not intercepted by a third party), where the session keys are used for encryption of real-time session data; and
remote viewing playback: the vehicle end continuously pushing real-time picture information after an end-to-end encryption connection is established between the monitoring end and the vehicle end, the monitoring end calling an end-to-end encryption-decryption interface after receiving the real-time picture data, decrypting the data by using the derived session key, and playing back the data through a video streaming player.

The second guardian module is configured to perform the following functions:
incident review: the monitoring end receiving an incident notification on an incident viewing page when the vehicle end is in the guardian mode, then the monitoring end downloading incident information and offline session information from the cloud server in response to receiving a click for viewing the notification, then calling an end-to-end encryption key derivation algorithm and the offline session information to derive an offline session key, and calling a decryption interface of an end-to-end encryption module to decrypt the incident information with the offline session key and view the incident information.
the end-to-end encryption module included in both the vehicle end and the monitoring end is configured to perform following functions: QR code generation or scanning, session management, key derivation, key management, data encryption and decryption, etc. The detailed function implementation process can refer to relevant descriptions of the vehicle monitoring method mentioned above, which will not be repeated herein.

It should be noted that, although the steps are described in a particular sequence in the above embodiments, those skilled in the art may understand that, to implement the effects of the disclosure, different steps are not necessarily performed in such a sequence, and the steps may be performed simultaneously (in parallel) or in another sequence. These changes fall within the scope of protection of the disclosure.

Those skilled in the art may understand that all or some of the procedures in the methods in the above embodiments of the disclosure may be implemented by using a computer program instructing related hardware. The computer program may be stored in a computer-readable storage medium. When the computer program is executed by a processor, the steps in the above method embodiments may be implemented. The computer program includes computer program code, and the computer program code may be in a source code form, an object code form, a form of an executable file, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, a software distribution medium, and the like. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a vehicle monitoring device.

Referring to FIG. 4, FIG. 4 is a block diagram of a main structure of a vehicle monitoring device according to an embodiment of the disclosure. As shown in FIG. 4, the vehicle monitoring device in this embodiment of the disclosure includes a processor 40 and a storage apparatus 41. The storage apparatus 41 may be configured to store a program for performing the vehicle monitoring method in the above method embodiments. The processor 40 may be configured to execute the program in the storage apparatus 41, where the program includes, but is not limited to, a program for performing the vehicle monitoring method in the above method embodiments. For ease of description, only parts related to the embodiments of the disclosure are shown. For specific technical details that are not disclosed, refer to the method part of the embodiments of the disclosure. The vehicle monitoring device may be a control device formed by various electronic devices.

Further, the disclosure further provides a computer-readable storage medium. In an embodiment of the computer-readable storage medium according to the disclosure, the computer-readable storage medium may be configured to store a program for performing the vehicle monitoring method in the above method embodiments, and the program may be loaded and run by a processor to implement the above vehicle monitoring method. For ease of description, only parts related to the embodiments of the disclosure are shown. For specific technical details that are not disclosed, refer to the method part of the embodiments of the disclosure. The computer-readable storage medium may be a storage apparatus device formed by various electronic devices. Optionally, the computer-readable storage medium in this embodiment of the disclosure is a non-transitory computer-readable storage medium.

Further, it should be understood that, because the configuration of modules is merely intended to illustrate function units of the apparatus in the disclosure, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or combined. Such a split or combination of specific modules does not cause the technical solutions to depart from the details of the disclosure. Therefore, technical solutions after any such split or combination shall all fall within the scope of protection of the disclosure.

Heretofore, the technical solutions of the disclosure have been described with reference to the preferred implementations shown in the accompanying drawings. However, those skilled in the art can readily understand that the scope of protection of the disclosure is apparently not limited to these specific implementations. Without departing from the details of the disclosure, those skilled in the art may make equivalent changes or replacements to related technical features. The technical solutions obtained after these changes or replacements fall within the scope of protection of the disclosure.

## Claims

1. A vehicle monitoring method, **characterized in that** the method is performed by a vehicle end, and the method comprises:
obtaining monitoring data of a vehicle and at least one piece of first label information corresponding to the monitoring data;
generating a first derived key of a preset length based on the at least one piece of first label information and a pre-stored seed key by using a key derivation algorithm;
extracting a one-time first encryption key corresponding to the monitoring data from the first derived key of the preset length;
encrypting the monitoring data by using the one-time first encryption key to obtain encrypted monitoring data; and
transmitting the encrypted monitoring data to a monitoring end, such that the monitoring end generates the one-time first encryption key and then decrypts the encrypted monitoring data with the generated one-time first encryption key to obtain the monitoring data.

2. The vehicle monitoring method according to claim 1, **characterized by** further comprising:
encrypting the at least one piece of first label information to obtain a first encrypted cipher text;
extracting first target information from the first encrypted cipher text;
encrypting the first target information to obtain a second encrypted cipher text; and
extracting second target information from the second encrypted cipher text as a one-time initialization vector, wherein the one-time initialization vector and the one-time first encryption key are jointly used to perform symmetric encryption on the monitoring data.

3. The vehicle monitoring method according to claim 1, **characterized by** further comprising:
generating a first key digest corresponding to the one-time first encryption key based on the one-time first encryption key; and
transmitting the first key digest to the monitoring end, such that the monitoring end generates a second key digest and compares the second key digest against the first key digest to verify the one-time first encryption key.

4. The vehicle monitoring method according to claim 1, **characterized in that** the generating a first derived key of a preset length based on the at least one piece of first label information and a pre-stored seed key by using a key derivation algorithm comprises:
if a quantity of the first label information is one piece, hashing the first label information to obtain a first hash value, and truncating the first hash value to obtain a truncated first hash value; and generating the first derived key of the preset length based on the seed key and the truncated first hash value; and
if the quantity of the first label information is at least two pieces, concatenating all the pieces of first label information to obtain concatenated information; hashing the concatenated information to obtain a second hash value, and truncating the second hash value to obtain a truncated second hash value; and generating the first derived key of the preset length based on the seed key and the truncated second hash value.

5. The vehicle monitoring method according to claim 1, **characterized in that** the generating a first derived key of a preset length based on the at least one piece of first label information and a pre-stored seed key by using a key derivation algorithm comprises:
if a monitoring mode of the vehicle is a guardian mode, generating, in response to detecting that the monitoring data satisfies a preset warning condition, the first derived key of the preset length based on the at least one piece of first label information and the pre-stored seed key by using the key derivation algorithm, wherein a start condition for the guardian mode is: a monitoring instruction transmitted by the monitoring end being received, or a monitoring instruction being generated; and
if the monitoring mode of the vehicle is a remote viewing mode, generating the first derived key of the preset length directly based on the at least one piece of first label information and the pre-stored seed key by using the key derivation algorithm, wherein a start condition for the remote viewing mode comprises: a remote viewing request transmitted by the monitoring end being received.

6. The vehicle monitoring method according to claim 1, **characterized by** further comprising:
obtaining, in response to receiving encrypted control data transmitted by the monitoring end, at least one piece of second label information corresponding to the encrypted control data;
generating a second derived key of a preset length based on the at least one piece of second label information and a pre-stored seed key;
extracting a one-time second encryption key corresponding to the encrypted control data from the second derived key of the preset length; and
decrypting the encrypted control data by using the one-time second encryption key to obtain control data corresponding to the encrypted control data for controlling the vehicle end.

7. A vehicle monitoring method, **characterized in that** the method is performed by a monitoring end, and the method comprises:
obtaining, in response to receiving encrypted monitoring data transmitted by a vehicle end, at least one piece of first label information corresponding to the encrypted monitoring data;
generating a first derived key of a preset length based on the at least one piece of first label information and a pre-stored seed key by using a key derivation algorithm;
extracting a one-time first encryption key corresponding to the encrypted monitoring data from the first derived key of the preset length; and
decrypting the encrypted monitoring data by using the one-time first encryption key to obtain monitoring data corresponding to the encrypted monitoring data.

8. The vehicle monitoring method according to claim 7, **characterized by** further comprising:
encrypting the at least one piece of first label information to obtain a first encrypted cipher text;
extracting first target information from the first encrypted cipher text;
encrypting the first target information to obtain a second encrypted cipher text; and
extracting second target information from the second encrypted cipher text as a one-time initialization vector, wherein the one-time initialization vector and the one-time first encryption key are jointly used to perform symmetric decryption on the encrypted monitoring data.

9. The vehicle monitoring method according to claim 7, **characterized by** further comprising:
generating a second key digest corresponding to the one-time first encryption key based on the one-time first encryption key; and
comparing the second key digest against a received first key digest transmitted by the vehicle end to verify the one-time first encryption key.

10. The vehicle monitoring method according to claim 7, **characterized in that** before the obtaining, in response to receiving encrypted monitoring data transmitted by a vehicle end, at least one piece of first label information corresponding to the encrypted monitoring data, the method further comprises:
if a monitoring mode of the vehicle is a guardian mode, transmitting, after receiving a warning notification, a download request to a cloud server to download the encrypted monitoring data from the cloud server, wherein a start condition for the guardian mode is: a monitoring instruction being transmitted to the vehicle end, or a monitoring instruction transmitted by the vehicle end being received; and
if the monitoring mode of the vehicle is a remote viewing mode, receiving the encrypted monitoring data directly from the cloud server, wherein a start condition for the remote viewing mode comprises: a remote viewing request being transmitted to the vehicle end.

11. The vehicle monitoring method according to claim 7, **characterized by** further comprising:
generating control data for controlling the vehicle end, and obtaining at least one piece of second label information corresponding to the control data;
generating a second derived key of a preset length based on the at least one piece of second label information and a pre-stored seed key;
extracting a one-time second encryption key corresponding to the control data from the second derived key of the preset length;
encrypting the monitoring data by using the one-time second encryption key to obtain encrypted control data; and
transmitting the encrypted control data to the vehicle end, such that the encrypted control data is decrypted by using the one-time second encryption key generated by the vehicle end, so as to obtain the control data.

12. The vehicle monitoring method according to claim 7, **characterized in that** before the generating a first derived key of a preset length based on the at least one piece of first label information and a pre-stored seed key by using a key derivation algorithm, the method further comprises:
obtaining an encrypted seed key from the vehicle end by code scanning; and
processing the encrypted seed key to obtain and store the seed key.

13. A vehicle monitoring method, **characterized in that** the method is performed by a monitoring system comprising a vehicle end and a monitoring end, and the method comprises:
the vehicle end obtaining monitoring data of a vehicle and at least one piece of first label information corresponding to the monitoring data; generating a first derived key of a preset length based on the at least one piece of first label information and a pre-stored seed key by using a key derivation algorithm; extracting a one-time first encryption key corresponding to the monitoring data from the first derived key of the preset length; encrypting the monitoring data by using the one-time first encryption key to obtain encrypted monitoring data; and transmitting the encrypted monitoring data to the monitoring end; and
the monitoring end obtaining, in response to receiving the encrypted monitoring data transmitted by the vehicle end, at least one piece of first label information corresponding to the encrypted monitoring data; generating a first derived key of a preset length based on the at least one piece of first label information and a pre-stored seed key by using a key derivation algorithm; extracting a one-time first encryption key corresponding to the encrypted monitoring data from the first derived key of the preset length; and decrypting the encrypted monitoring data by using the one-time first encryption key to obtain monitoring data corresponding to the encrypted monitoring data.

14. A vehicle monitoring device, comprising a processor and a storage apparatus configured to store a plurality of pieces of program code, **characterized in that** the program code is configured to be loaded and run by the processor to perform the vehicle monitoring method according to any one of claims 1 to 13.

15. A computer-readable storage medium storing a plurality of pieces of program code, **characterized in that** the program code is configured to be loaded and run by a processor to perform the vehicle monitoring method according to any one of claims 1 to 13.
